**Europäisches Patentamt**

**European Patent Office**

**Office européen des brevets**

(19)

(11) Veröffentlichungsnummer: **0 149 047**
**B1**

(12)

# EUROPÄISCHE PATENTSCHRIFT

(45) Veröffentlichungstag der Patentschrift:
**01.06.88**

(51) Int. Cl.⁴: **F 02 M 23/00,** F 02 M 23/08,
F 02 M 23/12, F 02 M 25/06

(21) Anmeldenummer: **84113680.7**

(22) Anmeldetag: **13.11.84**

(54) **Zusatzluftvorrichtung für Brennkraftmaschinen.**

(30) Priorität: **03.12.83 DE 3343797**
**27.06.84 DE 3423603**

(43) Veröffentlichungstag der Anmeldung:
**24.07.85 Patentblatt 85/30**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**DE - A - 2 361 505**
**DE - A - 2 612 781**
**DE - A - 2 651 308**
**DE - U - 1 991 247**
**FR - A - 1 560 710**
**GB - A - 1 004 494**
**US - A - 2 851 027**
**US - A - 3 547 090**
**US - A - 4 279 236**

(73) Patentinhaber: **Pommer, Fredi, Bogenstrasse 1,**
**D-5630 Remscheid (DE)**
Patentinhaber: **Blume, Axel Jens,**
**Kardinal-Schulte-Strasse 14, D-5060 Bensberg (DE)**

(72) Erfinder: **Pommer, Fredi, Bogenstrasse 1,**
**D-5630 Remscheid (DE)**
Erfinder: **Blume, Axel Jens, Kardinal-Schulte-Strasse 14,**
**D-5060 Bensberg (DE)**

(74) Vertreter: **Dipl.-Ing. H. Hauck Dipl.-Phys. W. Schmitz**
**Dipl.-Ing. E. Graalfs Dipl.-Ing. W. Wehnert Dr.-Ing. W.**
**Döring, Mörikestrasse 18, D-4000 Düsseldorf 30 (DE)**

## Beschreibung

Die vorliegende Erfindung betrifft eine Vorrichtung zur Zuführung von Zusatzluft in den Ansaugkanal einer mit einem Vergaser, einem Luftfilter und einer Verbindungsleitung zwischen Luftfilter und Kurbelgehäuse versehenen Brennkraftmaschine nach dem Oberbegriff des Patentanspruchs 1.

Eine Vorrichtung zum Zuführen von Zusatzluft in den Ansaugkanal einer Brennkraftmaschine ist aus der DE-A-2 361 505 bekannt. Bei dieser bekannten Vorrichtung ist in einem Verteilerzwischenstück ein Hohlsteg vorhanden, der eine Reihe von kreisförmigen Bohrungen als Ausströmöffnungen für die Zusatzluft aufweist. Als Zusatzluft findet hierbei Aussenluft Verwendung, die über zwei ein Regelorgan darstellende Kugelventile dem Hohlsteg zugeführt wird. Diese Kugelventile werden durch den Luftdruck der angesaugten Zusatzluft aus ihrer Schliessstellung herausbewegt und geben so den Luftdurchtrittsquerschnitt mehr oder weniger frei. Das erste Kugelventil öffnet sich beim Anlauf der Brennkraftmaschine mit einer geringen Verzögerung, während sich das zweite Kugelventil zusätzlich beim Erreichen einer Motordrehzahl von etwa 2000 UpM öffnet. Diese Vorrichtung hat den Nachteil, dass die Steuerungsmöglichkeiten der einzuführenden Zusatzluft unzureichend sind und dass nur eine unzureichende Verwirbelung der Zusatzluft mit dem im Ansaugkanal befindlichen Kraftstoff-Luft-Gemisch erreicht wird.

Eine Vorrichtung mit den Merkmalen des Oberbegriffs des Patentanspruchs 1 ist aus der DE-A-2 321 065 bekannt. Bei dieser bekannten Vorrichtung ist die Zuströmleitung an das Luftfilter der Brennkraftmaschine angeschlossen, so dass gefilterte Umluft sowie die gefilterten Öldämpfe aus dem Kurbelgehäuse als Zusatzluft Verwendung finden. Der Verteiler ist bei dieser Ausführungsform als Ringdüse ausgebildet, an deren Innenseite sich schräggestellte schlitzförmige Ausströmöffnungen befinden. Das Regelorgan für die Zusatzluft wird hierbei durch eine mechanische Steuerung gebildet, die in Verbindung mit der Drosselklappe und dem Gaspedal steht. Auch diese bekannte Vorrichtung weist nur eine unzureichende Steuerungs- bzw. Regelungsmöglichkeit der Zusatzluft in bezug auf die tatsächlichen Lastzustände der Brennkraftmaschine auf und ist in bezug auf die erreichte Vermischung und Verwirbelung der Zusatzluft verbesserungswürdig.

Es kommt nämlich bei derartigen Vorrichtungen darauf an, durch die Einführung von Zusatzluft in den Ansaugkanal ein mageres Kraftstoff-Luft-Gemisch sowie eine bessere Verteilung dieses Gemisches in den Brennräumen der Brennkraftmaschine zu erreichen. Hierdurch kann der Anteil der Schadstoffe im Abgas der Brennkraftmaschine reduziert und Kraftstoff gespart werden.

Ausgehend vom vorstehend genannten Stand der Technik liegt der Erfindung die Aufgabe zugrunde, die Schadstoffreduzierung und Kraftstoffersparnis noch weiter zu verbessern.

Diese Aufgabe wird erfindungsgemäss durch eine Vorrichtung der angegebenen Art mit den kennzeichnenden Merkmalen des Patentanspruchs 1 gelöst.

Bei der erfindungsgmässen Vorrichtung wird als Zusatzluft nicht reine Aussenluft bzw. ein gefiltertes Gemisch aus Aussenluft und der aus dem Kurbelgehäuse der Brennkraftmaschine stammenden Atmosphäre verwendet, sondern die aus dem Kurbelgehäuse der Brennkraftmaschine stammende Atmosphäre wird direkt in die Zuströmleitung für die Zusatzluft eingeführt. Bei dieser, aus dem Kurbelgehäuse zugeführten Atmosphäre handelt es sich um Öldämpfe, Ölnebel, Ölpartikel, Kondenswasser usw., d.h. um ein Gemisch, das mit nichtbrennbaren Partikeln angereichert ist. Durch Zuführung dieses Gemisches in einem aufbereiteten Zustand über den Verteiler in den Ansaugkanal wird eine besonders wirksame Abmagerung des in die Brennkraftmaschine eingeführten Kraftstoff-Luft-Gemisches und somit eine besonders grosse Reduzierung der im Abgas der Brennkraftmaschine enthaltenen schädlichen Bestandteile ($NO_x$, CO und CH) erreicht.

Weiterbildungen des Erfindungsgegenstandes gehen aus den Unteransprüchen hervor.

Zu einer besonderen Ausführungsform gehört das speziell ausgebildete Regelorgan, das an die vom Ansaugkanal zum Zündverteiler führende Leitung angeschlossen ist und somit durch Abgriff des Unterdrucks im Ansaugkanal den freien Querschnitt der Zuströmleitung für die Zusatzluft in Abhängigkeit von den jeweiligen Lastbedingungen (Leerlauf, Teillast, Vollast) steuert. Es lässt sich somit in bezug auf die jeweilige Lastbedingung eine optimale Menge an Zusatzluft dem Ansaugkanal zuführen. Darüberhinaus kann hierbei am Regelorgan eine Bypassregelung vorgesehen sein, über die der dem Zündverteiler zugeführte Unterdruck moduliert und somit eine Verstellung des Zündzeitpunktes erreicht werden kann.

Die Erfindung wird nachfolgend anhand von Ausführungsbeispielen in Verbindung mit der Zeichnung im einzelnen beschrieben. Es zeigen:

Figur 1 eine Draufsicht auf ein mit einem Hohlsteg versehenes Verteilerzwischenstück;

Figur 2 einen Vertikalschnitt durch das Verteilerzwischenstück der Fig. 1;

Figur 3 den in Fig. 1 gezeigten Hohlsteg in der Draufsicht;

Figur 4 einen Vertikalschnitt durch den Hohlsteg der Fig. 3;

Figur 5 eine schematische Gesamtsicht der Vorrichtung;

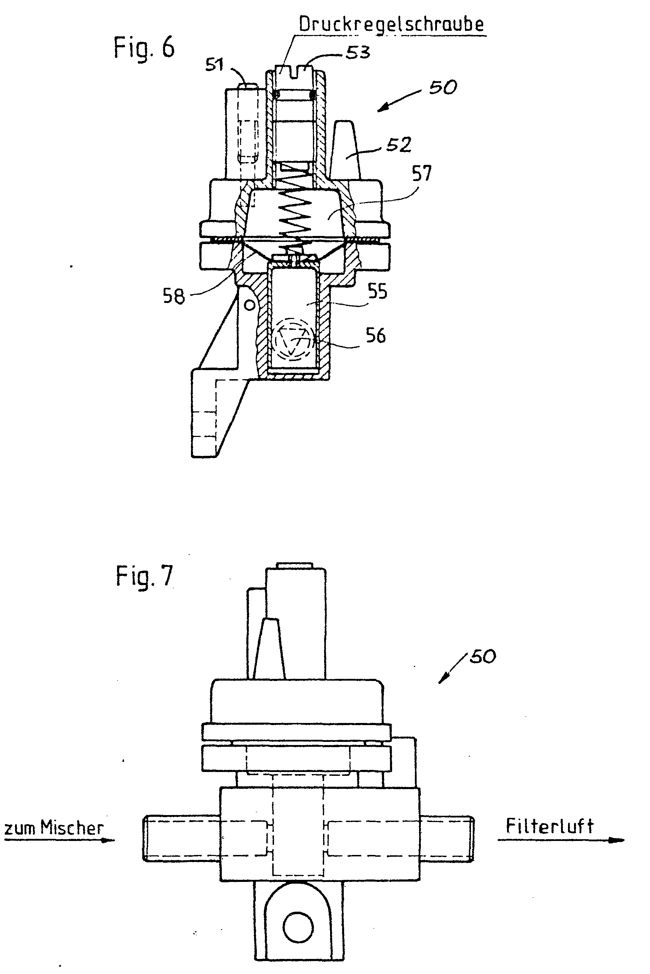

Figur 6 einen Schnitt durch ein Regelorgan;

Figur 7 eine Seitenansicht des Regelorgans der Figur 6;

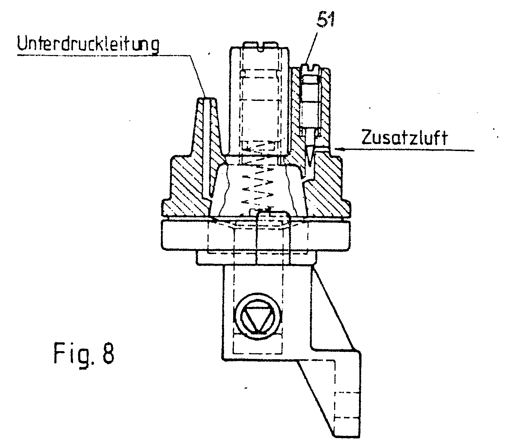

Figur 8 einen weiteren Schnitt durch das Regelorgan;

Figur 9 einen Hohlsteg einer weiteren Ausführungsform mit gegenläufiger Schlitzanordnung in Draufsicht;

Figur 10 einen Schnitt längs der Linie X–X der Figur 9;

Figur 11 einen Längsschnitt durch den Hohlsteg der Figur 9 mit Reduziereinsatz;

Figur 12 den Reduziereinsatz der Figur 11 im Schnitt;

Figur 13 einen Schnitt durch ein Regelorgan einer weiteren Ausführungsform;

Figur 14 eine Draufsicht auf ein mit dem Hohlsteg der Fig. 8 versehenes Verteilerzwischenstück;

Figur 15 eine Ansicht des Regelorgans der Figur 13;

Figur 16 eine Draufsicht des Regelorgans der Figur 13;

Figur 17 eine perspektivische Ansicht des Regelorgans der Figur 13 mit einem Viertelausschnitt; und

Figur 18 einen Teilschnitt durch dieses Regelorgan.

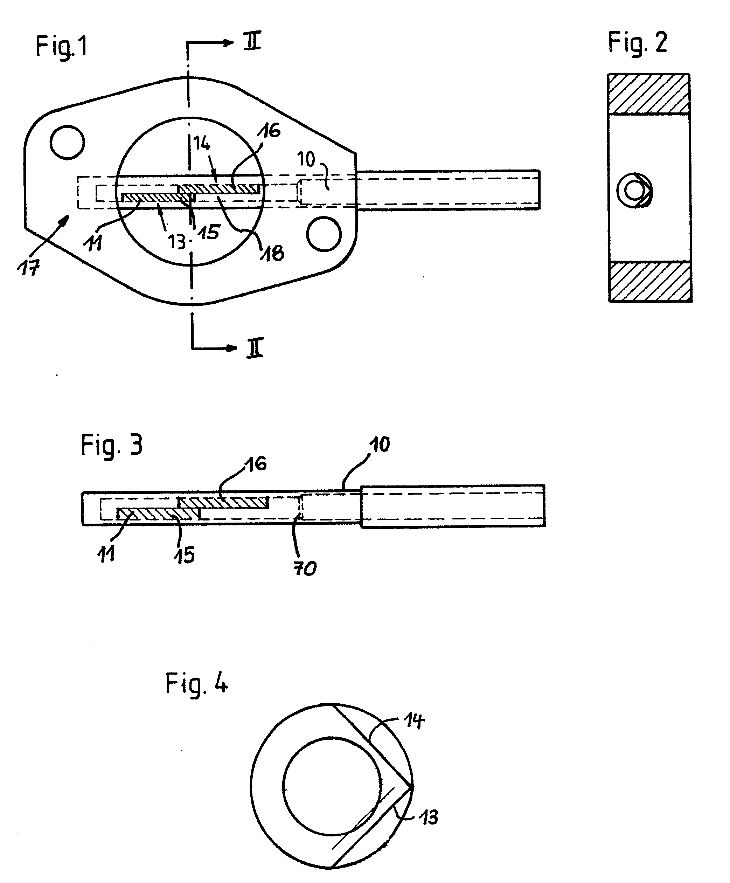

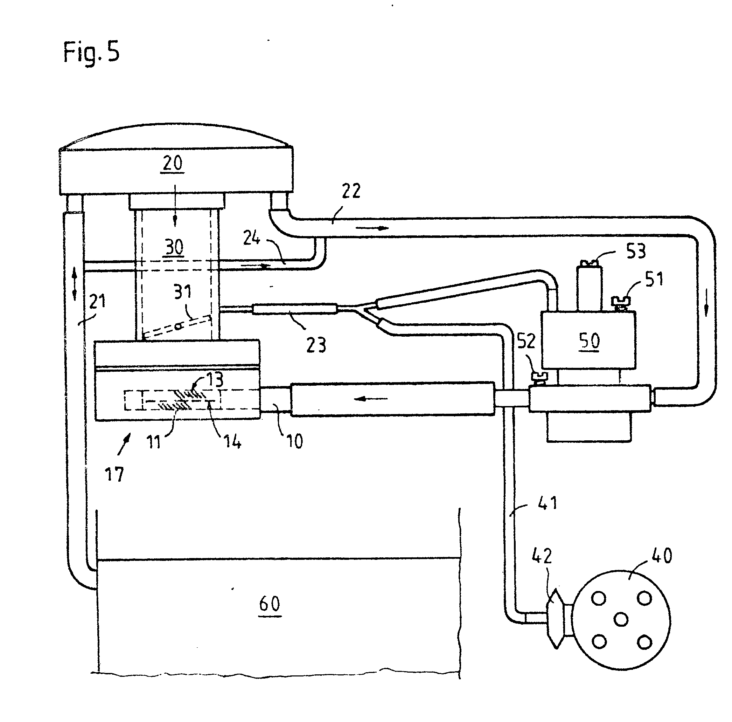

In den Figuren 1–4 ist der als Hohlsteg 10 ausgebildete Verteiler 17 dargestellt, der an einem Verteilerzwischenstück befestigt ist. Besonders aus der Figur 4 ist ersichtlich, dass der Hohlsteg 10 Schrägflächen 13, 14 aufweist, die miteinander einen Winkel bilden, wobei das gebildete Dreieck eine Halbrundbasis aufweist. Auf den Schrägflächen 13, 14 sind Schlitzgruppen 15, 16 angeordnet, deren Schlitze in der Draufsicht parallel zueinander angeordnet sind. Der Hohlsteg 10 bildet eine Mischkammer 18. Die Luftzuführung zum Hohlsteg 10 ist bei 70 kurz vor der Mischkammer verengt, so dass sich an dieser Stelle eine erhöhte Strömungsgeschwindigkeit ergibt.

Anhand der Figur 5 wird das Zusammenwirken der Mischkammer 18 mit dem Luftfilter 20, dem Vergaser 30, einem Zündverteiler 40 und einem speziell ausgebildeten Regelorgan 50 für die Zusatzluft erläutert: Über das Luftfilter 20 wird Luft angesaugt, und die gefilterte Luft wird in den Vergaser 30 eingeführt, in dem eine übliche Drosselklappe 31 angeordnet ist. An das Luftfilter 20 ist zur Belüftung des Kurbelgehäuses eine Verbindungsleitung 21 angeschlossen. Zwischen der Verbindungsleitung 21 und einer Zuströmleitung 22 für die Zusatzluft ist eine Verbindung über eine Rohrleitung 24 vorgesehen. Vom Vergaser 30 selbst führt eine Unterdruckleitung 23 zum Regelorgan 50 und mittels eines T-Stückes eine weitere Unterdruckleitung 41 zum Zündverteiler 40.

In der Verbindungsleitung 21 herrscht, über das Zeitintervall betrachtet, beim Niedergang der Kolben im Motorgehäuse Unterdruck und beim Aufwärtsgang Überdruck. Die Erfindung nutzt diese Erkenntnis und zapft die Verbindungsleitung 21 zur Entnahme der Zusatzluft an. Dies geschieht über die Rohrleitung 24, die eine direkte, im Querschnitt engere Verbindung zwischen der Verbindungsleitung 21 und dem Regelorgan 50 über die Zuströmleitung 22, die vom Filter 20 zum Regelorgan 50 führt, bildet.

Das durch die Anordnung dieser Verbindungsleitung 24 gewonnene Ergebnis ist überraschend. Bei Tests mit Fahrzeugen der Firma Citroen ergab sich eine Kraftstoffersparnis von durchschnittlich 15 bis 20%.

Des weiteren wurden Minderungen des Schadstoffausstosses bei NOX um 30%, CH um 45% und CO um 70% erzielt.

Die Erfindung erklärt sich diese ausserordentlichen Werte so: Der pneumatisch pulsierende Luftstrom zwischen Kurbelgehäuse 60 und Leitung 21 enthält Öldämpfe in Form eines Nebels. Das erklärt auch die bekannte Erscheinung des Verölens von Teilen des Filters 20.

Es ist gesicherte Erkenntnis der Erfindung, dass der Niederschlag des Ölnebels nach Installation der Verbindungsleitung 24 aufhört oder überwiegend zurückgeht. Das kann nur bedeuten, dass die Verbindungsleitung 24 beachtliche Teile des Ölnebels, in die zum Regelorgan 50 führende Zuströmleitung 22 überführt. Von dort gelangt das so angereicherte und entstandene Luftgemisch in den Verteiler 17, d.h. dass die Mischung von erstaufbereitetem Vergaserbrennstoff mit einer Mischung von Reinluft aus dem Filter und ölnebelangereicherter Luft aus der Verbindungsleitung 24 ein hochaufbereitetes Brennstoffgemisch entstehen lässt, das den Verbrennungsablauf günstiger ablaufen lässt.

Das Regelorgan 50 für die Zusatzluft weist, wie die Figurengruppe 6 bis 8 zeigt, eine Bypassregelung 51, eine Leerlaufregelung 52, eine Druckregelschraube 53 für einen Regelkolben 55 und eine Zuleitung zum Regelorgan und Ableitung zum Hohlsteg 10 auf, wobei die Zuleitung im Querschnitt dreiecksförmig ausgebildet ist, wie bei 56 gezeigt. Der Kolben 55 ist als Gleitkolben ausgebildet. Das Regelorgan weist eine Membrankammer 57 auf. Die Membran 58 ist federbelastet.

Die Arbeitsweise des Verteilers 17 kennzeichnet sich in der pneumatischen Wirkung in der Mischkammer 18 durch eine Doppelwirkung nach zwei Seiten. Die beiden Strömungsflügel treffen mit dem einströmenden Gas aufeinander. So wird auf kleinstem Raum höchste Turbulenz erzeugt.

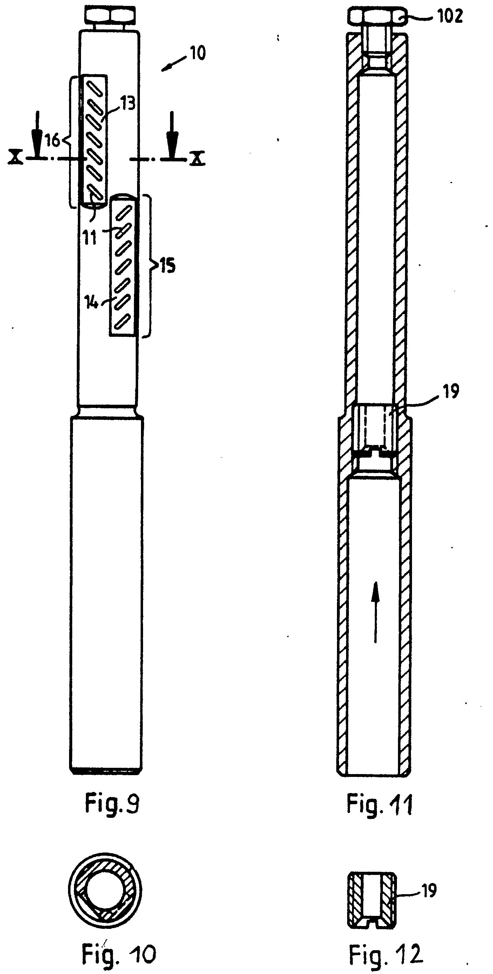

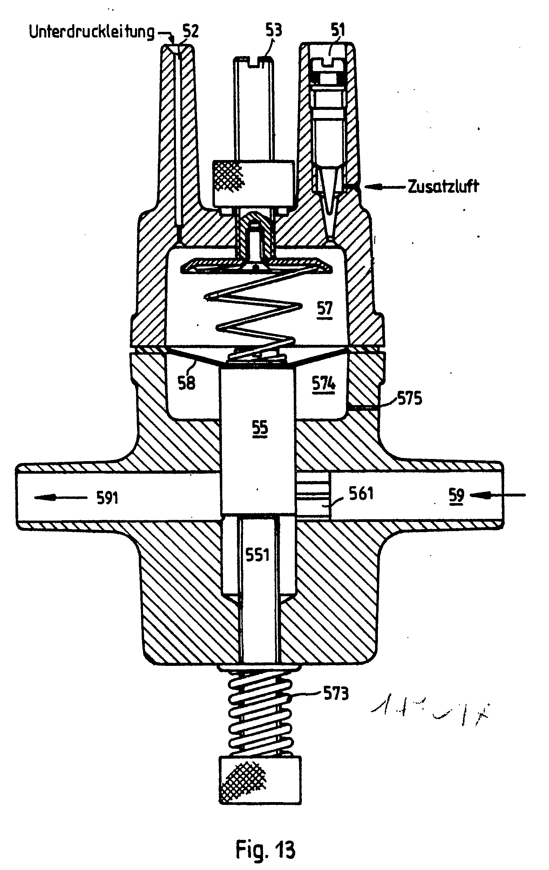

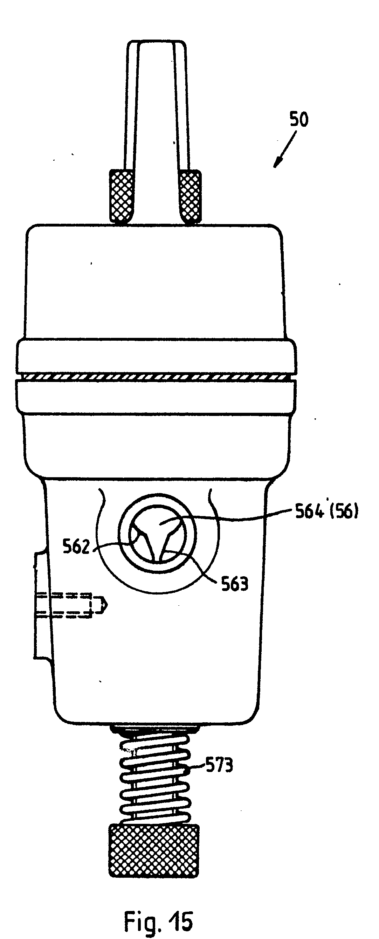

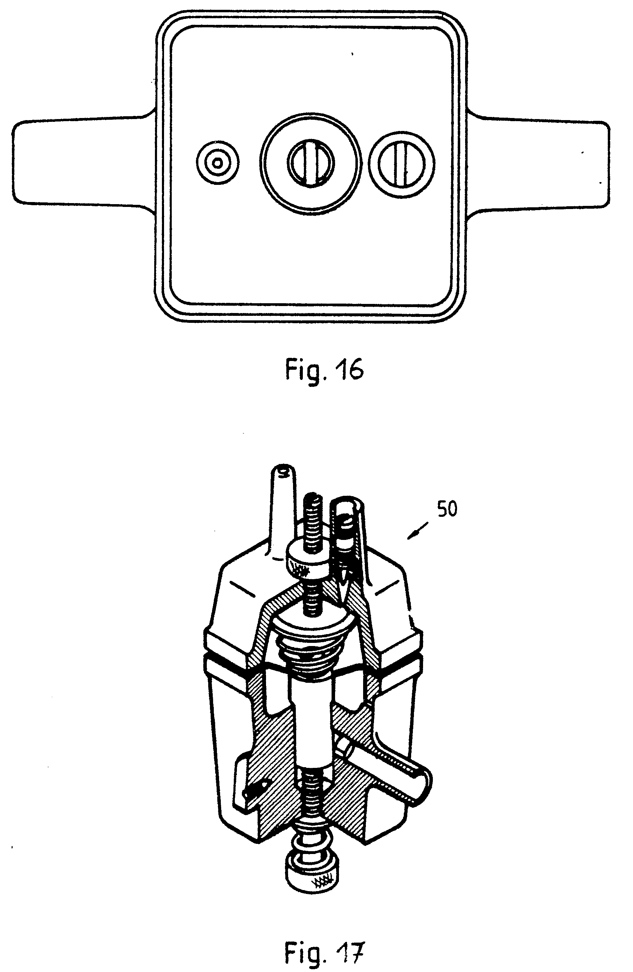

In den Figuren 9 bis 18 ist eine weitere Ausführungsform einer Vorrichtung zur Zuführung von Zusatzluft dargestellt. Diese weist sowohl am Hohlsteg 10 als auch am Regelorgan 50 Modifikationen gegenüber der ersten Ausführungsform auf.

Hierbei sind die Schlitzgruppen 15, 16 des Hohlsteges 10 hinsichtlich ihrer Lage derart modifiziert worden, dass diese nicht mehr parallel zueinander, sondern winklig zueinander angeordnet sind. Es hat sich bei weiteren Tests herausgestellt, dass diese Anordnung eine beachtliche Verbesserung der Mischleistung mit sich bringt.

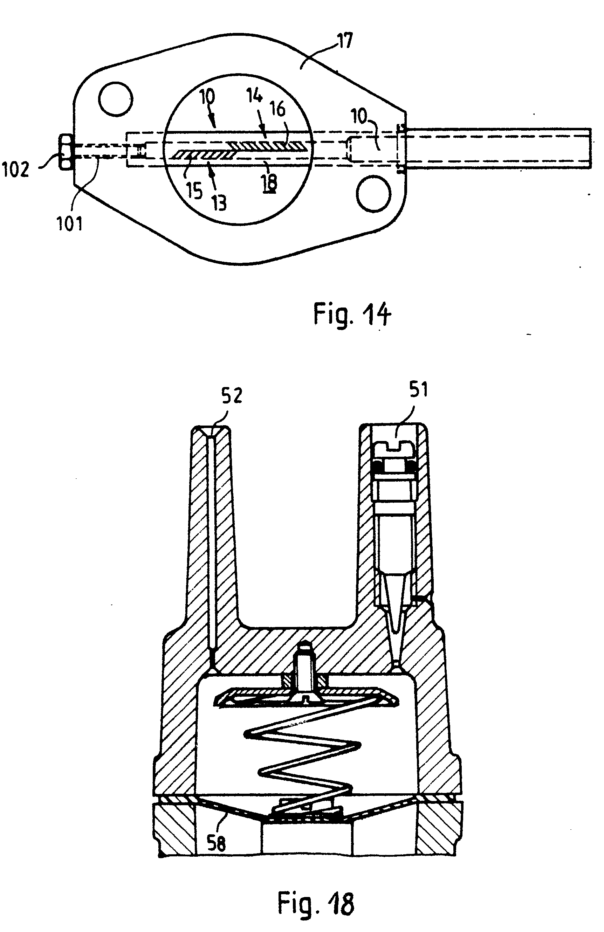

Es wurde ferner dem Hohlsteginneren ein Reduziereinsatz 19 vorgeordnet, welcher die Geschwindigkeit des ankommenden Gasgemisches vor den Schlitzgruppen 15, 16 beachtlich erhöht. Schliesslich ist am Hohlsteg 10 in dessen Spitze eine Gewindebohrung 101 angeordnet, die eine vereinfachte Montage und Demontage dadurch erlaubt, dass eine Befestigungsschraube 102, gemäss Fig. 14, durch Anziehen die Position des Hohlsteges 10 fest arretiert und bei Lösen der Schraube das Entfernen des Hohlsteges, beispielsweise für Wartungszwecke schnell und mühelos erlaubt.

Die Änderungen am Regelorgan 50 erfassen den Bereich des Kolbens 55 und eine Anschlag- und Hubbegrenzungsschraube 551, die unter dem Druck einer Haltefeder 573 steht. Dadurch wird die Schraube 551 arretiert.

Zu den Funktionen des Gleitkolbens 55 trägt ein in der Zuluftbohrung 59 angeordneter Raumkörper bei. Dieser Raumkörper hat im oberen Teil 562 zylindrische Gestalt und ist im unteren Teil 563 spitzwinklig ausgebildet, wobei der offene Querschnitt 564 achsparallel zur Bohrung 59 ausgebildet ist.

In der Gesamtfunktion des Regelorgans 50 wirken der Gleitkolben 55 und der Raumkörper 561 mit Dreiecksdurchlass eng zusammen. Der Dreiecksdurchlass verhindert bei voller Aussteuerung ein Verschlucken des Motors und bewirkt einen langsamen Zufluss aus dem Regelorgan 50 in Richtung des Luftauslasses 591.

Dem gleichen Zweck der Vergleichmässigung dienen die relativ engen Bohrungen 52 für die obenseitige Membrankammer 57 und die Zuluftbohrung 575 in den unteren Raum 574 der Membrankammer. Grundsätzlich erfolgt die Anpassung an den jeweiligen Motortyp durch die Bypassregelung 51.

## Patentansprüche

1. Vorrichtung zur Zuführung von Zusatzluft in den Ansaugkanal einer mit einem Vergaser (30), einem Luftfilter (20) und einer Verbindungsleitung (21) zwischen Luftfilter (20) und Kurbelgehäuse (60) versehenen Brennkraftmaschine, mit einem im Ansaugkanal stromab der Drosselklappe (31) angeordneten rohrflanschartigen Verteilerzwischenstück zur Einführung der Zusatzluft, einer Zuströmleitung (22) für die Zusatzluft, die an das Luftfilter (20) einerseits und an einen im Verteilerzwischenstück angeordneten Verteiler (17) andererseits angeschlossen ist und in der ein Regelorgan (50) zur Regelung der Zusatzluft vorgesehen ist, wobei der Verteiler (17) eine Vielzahl von in den Ansaugkanal mündenden schlitzförmigen Ausströmöffnungen (11) aufweist, dadurch gekennzeichnet, dass die Zuströmleitung (22) für die Zusatzluft stromauf des Regelorgans (50) zusätzlich an die Verbindungsleitung (21) zwischen Luftfilter (20) und Kurbelgehäuse (60) angeschlossen ist, dass eine vom Ansaugkanal zum Zündverteiler (40) führende Leitung (41) vorgesehen ist, mit der das Regelorgan (50) verbunden ist, dass der Verteiler (17) ein mit Dreiecksprofil ausgebildeter Hohlsteg (10) ist, dessen Längsachse die Achse des Ansaugkanales senkrecht schneidet und der zweiwinklig zur Strömungsrichtung im Ansaugkanal angestellte Schrägflächen (13, 14) aufweist, auf denen jeweils eine Reihe der schlitzförmigen Ausströmöffnungen (11) angeordnet ist, und dass am Eingang des Hohlsteges (10) eine Verengung angeordnet ist.

2. Vorrichtung nach Anspruch 1, dadurch gekennzeichnet, dass die Ausströmöffnungen (11) auf beiden Schrägflächen (13, 14) in der Draufsicht schiefwinklig zur Hohlstegachse angestellt sind.

3. Vorrichtung nach Anspruch 2, dadurch gekennzeichnet, dass die schlitzförmigen Ausströmöffnungen (11) der einen Reihe mit den schlitzförmigen Ausströmöffnungen (11) der anderen Reihe einen Winkel bilden.

4. Vorrichtung nach Anspruch 3, dadurch gekennzeichnet, dass die schlitzförmigen Ausströmöffnungen (11) der einen und der anderen Reihe spitzwinklig gegenläufig zueinander angeordnet sind.

5. Vorrichtung nach Anspruch 2, dadurch gekennzeichnet, dass der Hohlsteg (10) hälftig derart unterteilt ist, dass die eine Hälfte eine Schrägfläche (13) und die andere Hälfte eine weitere Schrägfläche (14) bildet.

6. Vorrichtung nach Anspruch 5, dadurch gekennzeichnet, dass die beiden Schrägflächen (13, 14) in Längsrichtung des Hohlsteges (10) versetzt zueinander angeordnet sind.

7. Vorrichtung nach einem der vorangehenden Ansprüche, dadurch gekennzeichnet, dass die Achse des Hohlsteges (10) mit der Achse der Drosselklappe (31) einen Winkel von 20° bildet.

8. Vorrichtung nach Anspruch 2, dadurch gekennzeichnet, dass der Hohlsteg (10) eine die beiden Schrägflächen (13, 14) miteinander verbindende Halbrundbasis aufweist.

9. Vorrichtung nach einem der vorangehenden Ansprüche, dadurch gekennzeichnet, dass die Verengung am Eingang des Hohlsteges (10) durch einen lösbaren Reduziereinsatz (19) gebildet ist.

10. Vorrichtung nach einem der vorangehenden Ansprüche, dadurch gekennzeichnet, dass im Verteilerzwischenstück und in der Spitze des Hohlsteges (10) eine Gewindebohrung (101) zur Aufnahme einer Anschlag- und Begrenzungsschraube (102) für den Hohlsteg (10) angeordnet ist.

11. Vorrichtung nach einem der vorangehenden Ansprüche, dadurch gekennzeichnet, dass das Regelorgan (50) eine durch eine Membran (58) begrenzte Steuerkammer (57), die mit der vom Ansaugkanal zum Zündverteiler (40) führenden Leitung (41) in Verbindung steht, und einen mit der Membran (58) verbundenen, den Querschnitt der Zuströmleitung (22) variierenden Reglerkolben (55) aufweist.

12. Vorrichtung nach Anspruch 11, dadurch gekennzeichnet, dass das Regelorgan (50) eine Bypassregelung (51), eine Leerlaufregelung (52) und eine Druckregelung (53) für den Reglerkolben (55) aufweist.

13. Vorrichtung nach Anspruch 11 oder 12, dadurch gekennzeichnet, dass dem durch eine Feder (571) und die Membran (58) belasteten Kolben (55) ein Anschlag bzw. eine Hubbegrenzung (551) gleichachsig zugeordnet ist.

14. Vorrichtung nach einem der Ansprüche 11 bis 13, dadurch gekennzeichnet, dass in einem Sekundärlufteinlass (59) des Regelorgans (50) ein den Durchlass drosselnder Dreiecksdurchlass (561) angeordnet ist.

15. Vorrichtung nach Anspruch 14, dadurch gekennzeichnet, dass die Raumform des Dreiecksdurchlasses (561) aus einem ballig gestalteten oberen Teil (562) und einem spitzwinkligen Teil (563) besteht und die offenen Querschnitte (564) achsparallel zum Sekundärlufteinlass (59) verlaufen.

16. Vorrichtung nach einem der Ansprüche 11 bis 15, dadurch gekennzeichnet, dass der Raum (574) unterhalb der Membran (58) eine gesonderte, im Gehäuse angeordnete, offene Zuluftleitung (575) aufweist.

**Revendications**

1. Dispositif pour l'amenée d'air d'appoint dans le canal d'aspiration d'un moteur à combustion interne pourvu d'un carburateur (30), d'un filtre à air (20) et d'un conduit de communication (21) entre le filtre à air (20) et le carter de manivelles (60), avec une pièce intermédiaire distributrice à brides, disposée dans le canal d'aspiration, à l'aval du clapet d'étranglement (31), pour l'introduction de l'air d'appoint, avec un conduit d'amenée de courant (22) pour l'air d'appoint, qui est raccordé d'un côté au filtre à air (20) et de l'autre côté à un distributeur (17) disposé dans la pièce intermédiaire distributrice, et où l'on a prévu un organe de réglage (50) pour le réglage de l'air d'appoint, où le distributeur (17) comporte un grand nombre d'ouvertures de sortie (11) en forme de fentes débouchant dans le canal d'aspiration, caractérisé en ce que le conduit d'amenée de courant (22) pour l'air d'appoint est relié en amont de l'organe de réglage (50), supplémentairement, au conduit de communication (21) entre le filtre à air (20) et le carter de manivelles (60); en ce qu'est prévu un conduit (41) allant du canal d'aspiration au distributeur d'allumage (40) conduit auquel l'organe de réglage (50) est relié; en ce que le distributeur (17) est une barrette creuse (10) conformée avec un profil triangulaire, dont l'axe longitudinal coupe perpendiculairement l'axe du canal d'aspiration et qui présente deux surfaces obliques (13, 14) placées suivant un angle par rapport à la direction d'écoulement dans le canal d'aspiration, barrette sur laquelle est disposée chaque fois une série des ouvertures d'écoulement (11) en forme de fentes; et en ce qu'un rétrécissement est formé à l'entrée de la barrette creuse (10).

2. Dispositif suivant la revendication 1, caractérisé en ce que les ouvertures d'écoulement (11) en forme de fentes sont placées sur les deux surfaces obliques (13, 14) disposées dans la vue en plan, de façon à former un angle aigu avec l'axe de la barrette creuse.

3. Dispositif suivant la revendication 2, caractérisé en ce que les ouvertures d'écoulement (11) en forme de fentes de l'une des séries forment un angle avec les ouvertures d'écoulement (11) en forme de fentes de l'autre série.

4. Dispositif suivant la revendication 3, caractérisé en ce que les ouvertures d'écoulement (11) en forme de fentes de l'une et de l'autre séries sont disposées obliquement, en sens contraire l'une de l'autre.

5. Dispositif suivant la revendication 2, caractérisé en ce que la barrette creuse (10) est divisée en moitiés, de telle façon qu'une moitié forme une surface oblique (13) et l'autre moitié une autre surface oblique (14).

6. Dispositif suivant la revendication 5, caractérisé en ce que les deux surfaces obliques (13, 14) sont disposées avec décalage de l'une par rapport à l'autre, dans la direction longitudinale de la barrette creuse (10)

7. Dispositif suivant l'une quelconque des revendications précédentes, caractérisé en ce que l'axe de la barrette creuse (10) forme avec l'axe du clapet d'étranglement (31) un angle de 20°.

8. Dispositif suivant la revendication 2, caractérisé en ce que la barrette creuse (10) comporte une base demi-ronde reliant l'une à l'autre les deux surfaces obliques (13, 14).

9. Dispositif suivant l'une quelconque des revendications précédentes, caractérisé en ce que le rétrécissement à l'entrée de la barrette creuse (10) est formé par un raccord réducteur amovible. (19).

10. Dispositif suivant l'une quelconque des revendications précédentes, caractérisé en ce que, dans la pièce intermédiaire de répartition et dans la pointe de la barrette creuse (10) est disposée une forure à filets (101) pour recevoir une vis de butée et de limitation (102) pour la barrette creuse (10).

11. Dispositif suivant l'une quelconque des revendications précédentes, caractérisé en ce que l'organe de réglage (50) comporte une chambre de commande (57) limitée par une membrane (58), qui est en communication avec le conduit (41) allant du canal d'aspiration au distributeur d'allumage (40) et comporte un piston de réglage (55), relié à la membrane (58) et faisant varier la section de passage du conduit d'amenée de courant (22).

12. Dispositif suivant la revendication 11, caractérisé en ce que l'organe de réglage (50) comporte un réglage en dérivation (51), un réglage de marche à vide (52) et un réglage de pression (53) pour le piston de réglage (55).

13. Dispositif suivant la revendication 11 ou 12, caractérisé en ce qu'une butée, respectivement une limitation de course (551) est associée co-axialement au piston (55) chargé par un ressort (571) et par la membrane (58).

14. Dispositif suivant l'une des revendications 11 à 13, caractérisé en ce qu'un passage triangulaire (561) étranglant le passage, est disposé dans l'entrée d'air secondaire (59) de l'organe de reglage (50).

15. Dispositif suivant la revendication 14, caractérisé en ce que la forme dans l'espace du passage triangulaire (561) comporte une partie supérieure (562) en forme de boule d'une partie à angle aigu (563), et en ce que les sections de passage ouvertes (564) s'étendent, avec parallélisme des axes, par rapport à l'entrée d'air secondaire (59).

16. Dispositif suivant l'une des revendications 11 à 15, caractérisé en ce que l'espace (574) en dessous de la membrane (58) comporte un conduit d'amenée d'air ouvert, séparé, disposé dans l'enveloppe.

**Claims**

1. An apparatus for supplying supplemental air into the suction channel of an internal combustion engine which is provided with a carburetor (30), an air filter (20) and a connection line (21) between the air filter (20) and a crank case (60) said apparatus comprising a tube flange-like distributor intermediate member for the introduction of supplemental air located in said suction channel downwardly of the throttle valve (31), a supply line (22) for the supplemental air which is connected to said air filter (20) on the one side and to a distributor (17) located in the distributor intermediate member on the other side and in which a control member (50) for the control of the supplemental air is provided, said distributor (17) having a plurality of slot-like discharge openings (11) opening into the suction channel, characterized in that said supply line (22) for the supplemental air is additionally connected to the connection line (21) between the air filter (20) and the crank case (60) upwardly of the control member (50), in that a line (41) is provided leading from said suction channel to an ignition distributor (40) and connected to said control member (50), in that said distributor (17) is a hollow rod (10) having the profile of a triangle, the longitudinal axis of said hollow member perpendicularly intersecting the axis of said suction channel and said hollow rod having two inclined surfaces (13, 14) angularly located with respect to the flow direction in said suction channel, a row of said slot-like discharge openings (11) being located on each of said inclined surfaces, and in that a restriction is located at the inlet of said hollow rod (10).

2. The apparatus according to claim 1, characterized in that said discharge openings (11) on both inclined surfaces (13, 14) are located such that they form an acute angle with the axis of the hollow rod in the top view.

3. The apparatus according to claim 2, characterized in that said slot-like discharge openings (11) of one row are angularly located with respect to the slot-like discharge openings (11) of the other row.

4. The apparatus according to claim 3, characterized in that the slot-like discharge openings (11) of the one and the other row are located oppositely and form an acute angle with respect to one another.

5. The apparatus according to claim 2, characterized in that said hollow rod (10) is divided such that one half forms an inclined surface (13) and the other half forms a further inclined surface (14).

6. The apparatus according to claim 5, characterized in that both inclined surfaces (13, 14) are located offset with respect to one another in the longitudinal direction of the hollow rod (10).

7. The apparatus according to one of the preceding claims characterized in that the axis of the hollow rod (10) forms an angle of 20° with the axis of the throttle valve (31).

8. The apparatus according to claim 2, characterized in that the hollow rod (10) has a half round base connecting the two inclined surfaces (13, 14) with each other.

9. The apparatus according to one of the preceding claims, characterized in that the restriction at the inlet of said hollow rod (10) is formed by a removable reducing insert (19).

10. The apparatus according to one of the preceding claims, characterized in that a threaded bore (101) for the reception of a stop and limiting screw (102) for the hollow rod (10) is disposed in the distributor intermediate member and in the tip of the hollow rod (10).

11. The apparatus according to one of the preceding claims, characterized in that said control member (50) has a control chamber (57) confined by a diaphragm (58) and connected to the line (41) between said suction channel and said ignition distributor (40), and a control piston (55) connected to said diaphragm (58) and varying the cross-section of the supply line (22).

12. The apparatus according to claim 11, characterized in that said control member (50) has a bypass control (51) and idle control (52) and a pressure control (53) for said control piston (55).

13. The apparatus according to claim 11 or 12, characterized in that a stop means or a stroke limiting means (551) is associated with said piston (55) biased by a spring (571) and said diaphragm (58) on the same axis.

14. The apparatus according to one of the claims 11 to 13, characterized in that a triangular passage (561) throttling the flow is located in a secondary air inlet (59) of said control member (50).

15. The apparatus according to claim 14, characterised in that the shape of the triangular passage (561) is formed by a spherical upper part (562) and an acute part (563), and that the open cross-section (564) extend parallel with respect to the axis of the secondary air inlet (59).

16. The apparatus according to one of the claims 11 to 15, characterized in that the space (574) below the diaphragm (58) has a special open air inlet line (575) located in the housing.

1/9

Fig.1

II

14  16

10

11

13·  15

17

18

Fig. 2

Fig. 3

16

10

11  15

70

Fig. 4

14

13

Fig.5

Fig. 6

Druckregelschraube

51
53
50
52
57
58
55
56

Fig. 7

50

zum Mischer

Filterluft

4/9

Unterdruckleitung

51

Zusatzluft

Fig. 8

Fig. 9

Fig. 11

Fig. 10

Fig. 12

Fig. 13

17

Fig. 14

Fig. 18

50

564 (56)

562

563

573

Fig. 15

**Fig. 16**

**Fig. 17**